# EUROPEAN PATENT APPLICATION

(11) **EP 3 343 380 A1**
(43) Date of publication of application: **04.07.2018**
(21) Application number: 17210802.9
(22) Date of filing: 28.12.2017
(51) Int. Cl.: G06F 12/0817

(54) **DATA READ METHOD AND APPARATUS**

(30) Priority: 30.12.2016 CN 201611254244
(71) Applicant: HUAWEI TECHNOLOGIES CO., LTD., Guangdong 518129 (CN)
(72) Inventor: CHENG, Yongbo, Shenzhen, Guangdong 518129 (CN); LAN, Kejia, Shenzhen, Guangdong 518129 (CN); HE, Chenghong, Shenzhen, Guangdong 518129 (CN)
(74) Representative: Thun, Clemens

(57) **Abstract**

Embodiments of this application provide a data read method and apparatus. The method includes: receiving, by a first processor, a first read request message sent by a second processor; if an address of the first data is within a range from an upper bound to a lower bound recorded in a first directory range register of the first processor, sending, by the first processor, a first snoop message to at least one third processor other than the second processor, and simultaneously sending a second read request message to the memory; receiving, by the first processor, a first snoop response message sent by each of the at least one third processor according to the first snoop message; receiving, by the first processor, the first data sent by the memory according to the second data read request message; and sending, by the first processor, the first data to the second processor according to the first snoop response message. The data read method and apparatus according to the embodiments of this application can save a storage resource and reduce design costs.

## Description

### TECHNICAL FIELD

This application relates to the computer field, and more specifically, to a data read method and apparatus.

### BACKGROUND

In a cache coherence non-uniform memory access ("CC-NUMA" for short) system, each processor has its own expanded memory, and processors are connected to each other by using an interconnect interface to form a multi-processor system. A memory in each processor is visible to the entire system, that is, any processor can access a local memory or a memory in another processor. The multiple processors maintain data coherence according to a cache coherence protocol. Currently, most processors use a directory-based cache coherence protocol. Each processor has a directory that is stored in a corresponding memory of the processor. The directory records, in cache lines (Cache Line), a status of data that is in a memory in the processor and that is accessed by another processor. The directory needs to record an exclusive or shared state of the accessed data, and a processor that accesses the data.

It is assumed that the CC-NUMA system includes four central processing units (Central Processing Unit, "CPU" for short): CPU0, CPU1, CPU2, and CPU3, and the CPU0 needs to read one cache line of data from the CPU3 and have the data set to an exclusive state. The CPU0 sends an exclusive request to the CPU3, and the CPU3 reads memory data and returns a data response to the CPU0, and sets a corresponding status of the data to the exclusive state in a directory. Therefore, a copy of the data of the CPU3 is cached in a cache of the CPU0. Then, if the CPU1 initiates an access to the data of a same address, after receiving an access request from the CPU1, the CPU3 needs to read the memory data and the directory, and learns, according to the directory, that the exclusive copy of the data is cached in the CPU0. The CPU3 sends a snoop message to the CPU0, and after obtaining a snoop response fed back by the CPU0, changes the data status from the exclusive state to a shared state in the directory and sends the data to the CPU1.

It is always an urgent problem to optimize a process of accessing data between multiple processors. In a prior-art optimization solution, a directory cache (Directory Cache, "DC" for short) is configured in each processor, the directory cache caches a part of a directory, and the part of the directory records some addresses that are of data stored in the processor and that are accessed by another processor. When a DC hit occurs, a snoop message may be sent out in advance. For example, in the foregoing solution, after the CPU3 receives an access request sent by the CPU1, if an address of data that the CPU1 requests to access is in a DC, the CPU3 may directly send a snoop message to the CPU0 without waiting until the CPU3 obtains the data and a complete directory from a memory. Generally, however, the DC can cache only a directory of data whose volume is corresponding to one processor cache. If there are multiple external processor caches in a system, most of a directory cannot be accommodated in the DC and instead is stored in a memory, and the directory needs to be read from the memory. This cannot achieve an optimization purpose. To improve a hit rate, a DC capacity needs to be increased, but increasing the DC capacity wastes a storage resource and increases design costs.

### SUMMARY

In view of this, embodiments of this application provide a data read method, so as to save a storage resource and reduce design costs.

A first aspect provides a data read method, including: receiving, by a first processor, a first read request message sent by a second processor, where the first read request message carries an address of first data that the second processor needs to read and a first cache status of the first data, the first processor includes a first directory range register DRR, and the first DRR is configured to record an upper bound and a lower bound of an address of data that is in a memory corresponding to the first processor and that is accessed by another processor;
if the address of the first data is within a range from the upper bound to the lower bound, sending, by the first processor, a first snoop message to at least one third processor other than the second processor, and simultaneously sending a second read request message to the memory, where the second read request message is used to request to read the first data, and the first snoop message is used to indicate the first cache status requested by the second processor;
receiving, by the first processor, a first snoop response message sent by each of the at least one third processor according to the first snoop message, where the first snoop response message is used to indicate that a cache status of the first data has been modified according to the first cache status;
receiving, by the first processor, the first data sent by the memory according to the second data read request message; and
sending, by the first processor, the first data to the second processor according to the first snoop response message.

It should be understood that because the first snoop message and the second read request message are sent at the same time, there is no order between the two steps: the first processor receives the first snoop response message sent by each third processor and the first processor receives the first data sent by the memory, and the order should depend on actual situations. This is not limited in this embodiment of this application.

According to the data read method in this embodiment of this application, the DRR is configured in the first processor to record the upper bound and the lower bound of the address of the data that is in the memory corresponding to the first processor and that is accessed by the another processor. When receiving the request sent by the second processor, the first processor can perform filtering effectively if snooping is not needed, or can initiate snooping at the same time when reading memory data in advance if snooping is needed. This can save a storage resource, and reduce design costs, thereby improving user experience.

In a first possible implementation of the first aspect, a size of data in the memory corresponding to the range from the upper bound to the lower bound is less than or equal to a first threshold, and the method further includes: updating, by the first processor, the upper bound and the lower bound according to the address of the first data and the first threshold.

Specifically, after a system runs for a period, the range of the DRR may become very large, approximating to entire address space of the first processor, and the DRR performs snooping filtering in a poor way. Therefore, an address in the first DRR may be limited to a range. It is assumed that the size of the data corresponding to the range from the upper bound to the lower bound in the first DRR does not exceed the first threshold. If the size of the data corresponding to the range from the upper bound to the lower bound in the first DRR exceeds the first threshold, the first processor may update the upper bound and the lower bound in the first DRR.

Therefore, each time when another processor accesses memory data of the first processor, the first processor updates the upper bound and the lower bound in the first DRR according to an access address and the first threshold, so as to ensure a snooping filtering effect of the first DRR.

With reference to the foregoing possible implementation of the first aspect, in a second possible implementation of the first aspect, the updating the upper bound and the lower bound includes:
if the address of the first data is greater than the upper bound, and a size of data in the memory corresponding to a range from the address of the first data to the lower bound is greater than the first threshold, determining, by the first processor, the address of the first data as the updated upper bound, and determining an address obtained by subtracting the first threshold from the address of the first data as the updated lower bound; or
if the address of the first data is less than the lower bound, and a size of data in the memory corresponding to a range from the address of the first data to the upper bound is greater than the first threshold, determining, by the first processor, the address of the first data as the updated lower bound, and determining an address obtained by adding the address of the first data and the first threshold as the updated upper bound.

Specifically, when the address of the first data is not within the range from the upper bound to the lower bound in the first DRR, after the second processor accesses address data of the first data, the first processor needs to update the upper bound and the lower bound in the first DRR. There are the following two updating manners:
(1) If the address of the first data is greater than the upper bound, the address of the first data is determined as the updated upper bound, and the address obtained by subtracting the first threshold from the address of the first data is determined as the updated lower bound.
(2) If the address of the first data is less than the lower bound, the address of the first data is determined as the updated lower bound, and the address obtained by adding the address of the first data and the first threshold is determined as the updated upper bound.

The foregoing updating on the address recorded in the first DRR is similar to a sliding window mechanism, and may be performed in real time according to a status of data read by another processor.

With reference to the foregoing possible implementations of the first aspect, in a third possible implementation of the first aspect, the first processor includes multiple DRRs, each of the multiple DRRs is corresponding to a different address range, and the multiple DRRs include the first DRR; and
the method further includes:
determining, by the first processor, the first DRR from the multiple DRRs according to the address of the first data.

Specifically, multiple DRRs may be designed for one processor, and an address in each of the multiple DRRs is limited to a range. After receiving the first read request message sent by the second processor, the first processor may determine, according to the address of the first data carried in the first read request message, the first DRR including the address of the first data. If none of the DRRs include the address of the first data, the address of the first data may not be accessed by another processor, or may be missed because of the sliding window mechanism, and the first processor needs to further perform determining according to a directory stored in the memory.

With reference to the foregoing possible implementations of the first aspect, in a fourth possible implementation of the first aspect, the first processor includes multiple cores, and the multiple cores are in a one-to-one correspondence with the multiple DRRs.

Specifically, a corresponding DRR register may be designed for each core (Core) or each last level cache (Last Level Cache, "LLC" for short) of the first processor. Locality is better within one thread, and therefore, the DRR is more effective.

With reference to the foregoing possible implementations of the first aspect, in a fifth possible implementation of the first aspect, the method further includes:
if the address of the first data is not within the range from the upper bound to the lower bound, sending, by the first processor, a third read request message to the memory, where the third read request message is used to request to read the first data and a directory of the first processor, and the directory of the first processor is used to record a status of data, in the memory, accessed by the another processor;
receiving, by the first processor, the first data and the directory of the first processor that are sent by the memory according to the second data read request message;
if the first processor determines, according to the directory of the first processor, that the first data is cached by a fourth processor, sending, by the first processor, a second snoop message to the fourth processor, where the second snoop message is used to indicate the first cache status requested by the second processor;
receiving, by the first processor, a second snoop response message sent by the fourth processor according to the second snoop message, where the second snoop response message is used to indicate that the cache status of the first data has been modified according to the first cache status; and
sending, by the first processor, the first data to the second processor according to the second snoop response message.

It should be understood that the fourth processor is another processor other than the first processor and the second processor. Therefore, the fourth processor may be one of the at least one third processor. This is not limited in this embodiment of this application.

With reference to the foregoing possible implementations of the first aspect, in a sixth possible implementation of the first aspect, before the receiving, by a first processor, a first read request message sent by a second processor, the method further includes:
receiving, by the first processor, a third read request message sent by the fourth processor of the at least one third processor, where the third read request message carries the address of the first data and a second cache status of the first data;
sending, by the first processor, a fourth read request message to the memory according to the third read request message, where the fourth read request message is used to request to read the first data;
receiving, by the first processor, the first data sent by the memory according to the fourth read request message; and
sending, by the first processor, the first data to the fourth processor, and recording the cache status of the first data as the second cache status.

Specifically, before the second processor sends the first read request to the first processor, the fourth processor has read the first data. The first processor reads the first data from the memory according to the third read request message sent by the fourth processor, sends the first data to the fourth processor, and records, in a corresponding directory, the cache status of the first data as the second cache status. Herein, the second cache status may be an exclusive state, or may be a shared state. This is not limited in this embodiment of this application.

A second aspect provides a data read apparatus, configured to execute the method according to any one of the first aspect or the possible implementations of the first aspect. Specifically, the apparatus includes units configured to execute the method according to any one of the first aspect or the possible implementations of the first aspect.

A third aspect provides a data read apparatus, where the apparatus includes at least one processor, a memory, and a communications interface. The at least one processor, the memory, and the communications interface communicate with each other by using an internal connection path. The memory is configured to store a computer-executable instruction. The at least one processor is configured to execute the computer-executable instruction stored in the memory, so that the apparatus can execute the method according to any one of the first aspect or the possible implementations of the first aspect by performing data exchange with another apparatus by using the communications interface.

A fourth aspect provides a data read system, where the system includes the apparatus according to any one of the second aspect or the possible implementations of the second aspect; or
the system includes the apparatus according to any one of the third aspect or the possible implementations of the third aspect.

A fifth aspect provides a computer-readable medium, configured to store a computer program, where the computer program includes an instruction used to execute the method according to any one of the first aspect or the possible implementations of the first aspect.

### BRIEF DESCRIPTION OF DRAWINGS

FIG. 1 shows a schematic diagram of a multi-processor system to which an embodiment of this application is applied;
FIG. 2 shows a schematic flowchart of a data read method according to an embodiment of this application;
FIG. 3 shows a schematic diagram of an address in a first DRR according to an embodiment of this application;
FIG. 4 shows a schematic diagram of addresses in multiple DRRs according to an embodiment of this application;
FIG. 5 shows a schematic diagram of updating addresses in multiple DRRs according to an embodiment of this application;
FIG. 6 shows a schematic block diagram of a data read apparatus according to an embodiment of this application; and
FIG. 7 shows a schematic block diagram of another data read apparatus according to an embodiment of this application.

### DESCRIPTION OF EMBODIMENTS

The following describes the technical solutions in the embodiments of this application with reference to the accompanying drawings in the embodiments of this application.

For ease of understanding, the following first describes related concepts of a multi-processor system in this application.

In the multi-processor system, there is a memory for shared data and private data. The private data is used by a sole processor, and the shared data is used by multiple processors. In the multi-processor system, essentially, multiple processors read and write the shared data mutually to complete communication between the processors. After a processor caches private data, access to the data may be performed in a memory of the processor. When the shared data is loaded into a memory, a copy of the shared data may exist in multiple memories. It is assumed that a word in a memory of a processor is modified. If private data is stored in the word, the word is modified only in the memory. If shared data is stored in the word, a copy of the data may exist in a memory of another processor. After the data is modified most recently, if the copy cannot be modified in a timely manner, an error occurs when the data is accessed by another processor. Consequently, a multi-processor cache coherence problem occurs.

A multi-processor system is considered coherent if the multi-processor system satisfies the following conditions.
(1) A write operation performed by a processor P on an address X is closely followed by a read operation performed by the processor P on the address X, and between the read operation and the write operation, no other processor performs a write operation on the address X. In this case, a value written by the processor P is always returned in the read operation.
(2) After another processor performs a write operation on the address X, the processor P performs a read operation on the address X, there is a sufficient interval between these two operations, and no other processor performs a write operation on the address X. In this case, a value written by the another processor is always returned in the read operation.
(3) A write operation is serialized. That is, write operations on a same address are performed serially. If any two processors separately perform a write operation on a same address, the system performs, according to an order in which the write operations are sent, one write operation first, and then performs the other operation. Therefore, from a perspective of any processor in the multi-processor system, the write operations on the address are performed according to the foregoing serial order.

Therefore, a cache coherence protocol is needed to maintain data coherence between processors. Currently, most processors use a directory-based cache coherence protocol. Each processor has a directory that is stored in a corresponding memory of the processor. The directory records, in cache lines (Cache Line), a status of data that is in a memory in the processor and that is accessed by another processor. The directory needs to record an exclusive or shared state of the accessed data, and a processor that accesses the data. The directory may communicate with the processor and the memory by using a common bus, or may be connected to the memory by using a dedicated port, or may be implemented as a part of a central node controller.

On the foregoing basis, the directory needs to further track a status of each data block. Then, an MESI protocol is required. MESI is an acronym of modified (Modified), exclusive (Exclusive), shared (shared), and invalid (Invalid), representing four cache statues. The invalid state may be referred to as I state for short, the shared state may be referred to as S state for short, the exclusive state may be referred to as E state for short, and the modified state may be referred to as M state for short. Any cache data in the multi-processor system is in any one of the four states.

Invalid cache data means that the data is not in a cache, or content is out of date. For a cache purpose, the data in this state is ignored. Once cache data is marked as invalid, it is equivalent to that the data has never been loaded into a cache.

Shared cache data is a copy consistent with content in a main memory. Cache data in this state can be read only but cannot be written. Multiple groups of cache may have shared cache data of one memory address.

Exclusive cache data, the same as data in the S state, is also a copy consistent with content in the main memory. A difference lies in that cache data in the E state on a processor cannot be hold by another processor. This is referred to as "exclusive". This means if the another processor previously has the same cache data, a status of the cache data in the another processor immediately becomes the I state.

Modified cache data belongs to a dirty line because the data has modified by a processor to which the data belongs. If data is in the M state, a status of a copy of the data in another processor immediately becomes the I state. This law is same as that of the E state. In addition, if the modified cache data is discarded or marked as the I state, content of the data first needs to be written back to a memory.

To sum up, the E state resolves a problem that "another processor needs to be notified before modification to a block of memory is started": A processor can write cache data only when the cache data is in the E state or the M state, that is, in these two states, this cache line is exclusive to the processor. Therefore, when a processor needs to write cache data, and if the processor does not have an exclusive right, the processor first needs to send an exclusive request to a bus to notify other processors that they need to invalidate their copies of the cache data. The processor can start to modify the data only after obtaining the exclusive right. In addition, the processor knows that this cache line has only one copy that is in a cache of the processor, and therefore, no conflict occurs. If another processor needs to read the cache data, exclusive or modified cache data first needs to go back to the S state. If the data is modified cache data, content first needs to be written into a memory.

Therefore, in a multi-processor system, to read a line of cache data, a processor may actually need to communicate with another processor in the multi-processor system, and memory transmission may be caused between them. This application describes a data read procedure in the multi-processor system.

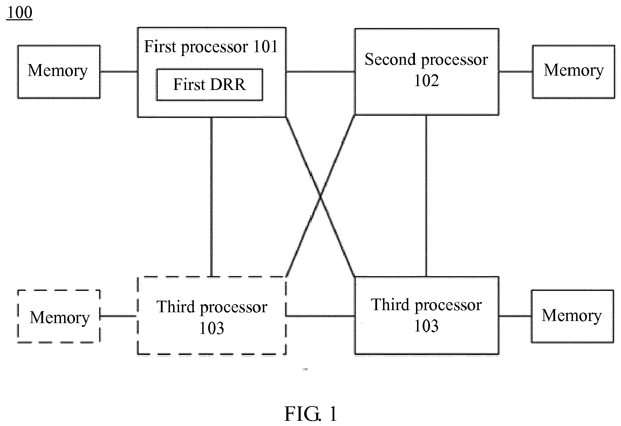

FIG. 1 shows a multi-processor system 100 according to an embodiment of this application. The multi-processor system 100 includes a first processor 101, a second processor 102, and at least one third processor 103. Each processor includes a memory of the processor, configured to cache data corresponding to the processor. The first processor 101 includes a first directory range register (Directory range register, "DRR" for short). The first DRR is configured to record an upper bound and a lower bound of an address of data that is in a memory corresponding to the first processor and that is accessed by another processor. Specifically, if the another processor has accessed multiple addresses, and the multiple addresses may be contiguous or may be non-contiguous, the first DRR only needs to use a largest value and a smallest value of the multiple addresses as the upper bound and the lower bound respectively for recording. In addition, a DRR may also be configured in the second processor 102 and the third processor 103. No limitation is imposed on a system architecture in this application.

In an implementation, the first processor, the second processor, and the third processor may be central processing units (Central Processing Unit, "CPU" for short). This is not limited in this embodiment of this application.

It should be understood that the multi-processor system 100 may also be referred to as a cache coherence non-uniform memory access (Cache Coherence Non-Uniform Memory Access, "CC-NUMA" for short) system. The multiple processors may access memory data with each other, and a data read/write operation conforms to the cache coherence protocol.

It should be further understood that four processors and one DRR shown in FIG. 1 are merely an example. Optionally, the multi-processor system 100 may include another quantity of processors and another quantity of DRRs. This is not limited in this application.

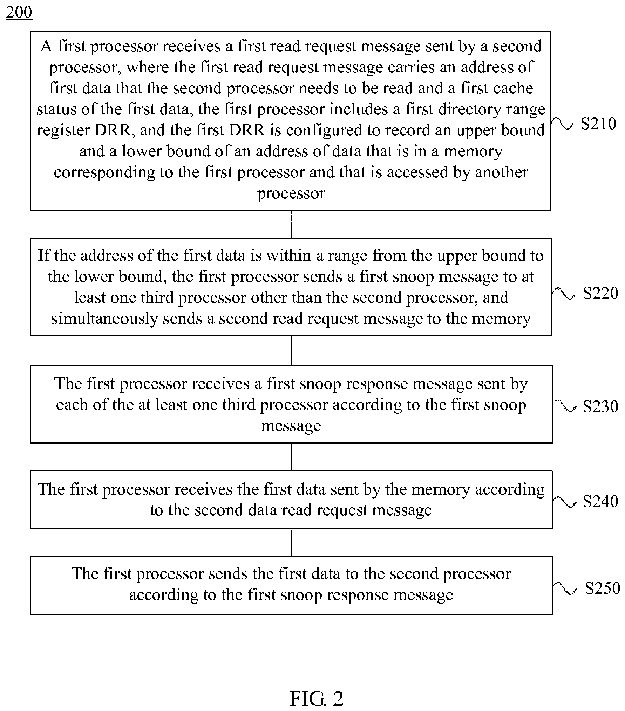

FIG. 2 shows a schematic flowchart of a data read method 200 according to an embodiment of this application. The method 200 may be applied to the multi-processor system 100 shown in FIG. 1. This is not limited in this embodiment of this application.

S210. A first processor receives a first read request message sent by a second processor, where the first read request message carries an address of first data that the second processor needs to read and a first cache status of the first data, the first processor includes a first directory range register DRR, and the first DRR is configured to record an upper bound and a lower bound of an address of data that is in a memory corresponding to the first processor and that is accessed by another processor.

S220. If the address of the first data is within a range from the upper bound to the lower bound, the first processor sends a first snoop message to at least one third processor other than the second processor, and simultaneously sends a second read request message to the memory, where the second read request message is used to request to read the first data, and the first snoop message is used to indicate the first cache status requested by the second processor.

S230. The first processor receives a first snoop response message sent by each of the at least one third processor according to the first snoop message, where the first snoop response message is used to indicate that a cache status of the first data has been modified according to the first cache status.

S240. The first processor receives the first data sent by the memory according to the second data read request message.

S250. The first processor sends the first data to the second processor according to the first snoop response message.

Specifically, in the multi-processor system 100, the second processor needs to read the first data in the memory of the first processor. The second processor sends the first read request message to the first processor. The first read request message is used to request to read the first data, and the first read request message carries the address of the first data and the first cache status of the first data requested by the second processor. The first cache status may be an exclusive state, or may be a shared state.

After the first processor receives the first read request message sent by the second processor, the first processor may determine, according to the address of the first data carried in the first read request message, whether the address of the first data is within the range from the upper bound to the lower bound recorded in the first DRR. If the address of the first data is within the range from the upper bound to the lower bound, it indicates that the address of the first data has been accessed by another processor, and the first data may be set to the exclusive state by the another processor. Therefore, to ensure cache coherence, the first processor needs to send the first snoop message to the at least one third processor other than the second processor, where the first snoop message is used to indicate the first cache status carried in the first read request message by the second processor, so that the at least one third processor modifies the cache status of the first data to be the same as the first cache status requested by the second processor. At the same time when sending the first snoop message to the at least one third processor, the first processor sends the second read request message to the memory connected to the first processor, to request to read the first data from the local memory.

It should be understood that if determining that the address of the first data is within the range from the upper bound to the lower bound, the first processor may perform two actions simultaneously: sending the first snoop message to the at least one third processor and sending the second read request message to the memory connected to the first processor. "At the same time" in "at the same time when sending the first snoop message to the at least one third processor, the first processor sends the second read request message to the memory connected to the first processor" means that there is no causal relationship between "sending the first snoop message" and "sending the second read request message", and the first processor can send the first snoop message before sending the second read request message, so that the two operations of the first processor can be performed at the same time, and latency is reduced effectively.

Each of the at least one third processor receives the first snoop message sent by the first processor, and determines whether the third processor caches the first data. If the first data is cached, the third processor modifies the cache status of the first data according to the first cache status. For example, if the first cache status is the shared state, a third processor that caches the first data and sets the first data to the exclusive state needs to modify the first data to the shared state. If the first cache status is the exclusive state, a third processor that caches the first data needs to set the first data cached by the third processor to an invalid state. After the status of the first data is modified according to a cache coherence protocol, the at least one third processor returns the first snoop response message to the first processor.

When the first processor receives the first snoop response message sent by each of the at least one third processor, it indicates that the cache status of the first data has been modified according to the protocol, and the first processor may set the first data to the first cache status according to the first read request message. In addition, the first processor receives the first data sent by the memory according to the second read request message, and sends the first data to the second processor. Until now, an entire procedure of reading the first data by the second processor is completed.

It should be understood that because the first snoop message and the second read request message are sent at the same time, there is no order between the two steps S230 and S240: the first processor receives the first snoop response message sent by each third processor and the first processor receives the first data sent by the memory, and the order should depend on actual situations. This is not limited in this embodiment of this application.

Therefore, according to the data read method in this embodiment of this application, the DRR is configured in the first processor to record the upper bound and the lower bound of the address of the data that is in the memory corresponding to the first processor and that is accessed by the another processor. When receiving the request sent by the second processor, the first processor can perform filtering effectively if snooping is not needed, or can initiate snooping at the same time when reading memory data in advance if snooping is needed. This can save a storage resource, and reduce design costs, thereby improving user experience.

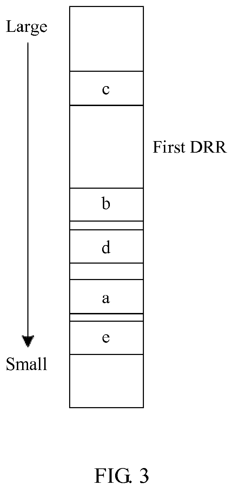

FIG. 3 shows a schematic diagram of an address in a first DRR according to an embodiment of this application. An upper bound of the address in the first DRR shown in FIG. 3 is c, and a lower bound of the address is e. The vertical box represents a complete address set in the first processor. Another processor other than the first processor sequentially accesses addresses a, b, c, d, and e in the first processor. The addresses are c, b, d, a, and e in descending order.

Specifically, after the addresses a, b, c, d, and e in the first processor are sequentially accessed, values of the first DRR are successively as follows:
a: {U, L} = {a, null}
b: {U, L} = {b, a}
c: {U, L} = {c, a}
d: {U, L} = {c, a}
e: {U, L} = {c, e}

Therefore, an address range finally recorded by the first DRR is {c, e}. Snooping and reading of the first data may be initiated at the same time provided that the address of the first data that the second processor requests to read is within the {c, e} range.

It should be understood that U is a capital of an initial letter of upper bound (Upper Bound), and L is a capital of an initial letter of lower bound (Lower Bound). This is applicable to the following, and details are not repeated in the following.

In an optional embodiment, a size of data in the memory corresponding to the range from the upper bound to the lower bound is less than or equal to a first threshold, and the method further includes:
updating, by the first processor, the upper bound and the lower bound according to the address of the first data and the first threshold.

Specifically, after the system runs for a period, the range of the DRR may become very large, approximating to entire address space of the first processor, and the DRR performs snooping filtering in a poor way. Therefore, an address in the first DRR may be limited to a range. It is assumed that the size of the data corresponding to the range from the upper bound to the lower bound in the first DRR does not exceed the first threshold. If the size of the data corresponding to the range from the upper bound to the lower bound in the first DRR exceeds the first threshold, the first processor may update the upper bound and the lower bound in the first DRR.

Therefore, each time when another processor accesses memory data of the first processor, the first processor updates the upper bound and the lower bound in the first DRR according to an access address and the first threshold, so as to ensure a snooping filtering effect of the first DRR.

In an optional embodiment, the updating the upper bound and the lower bound includes:
if the address of the first data is greater than the upper bound, and a size of data in the memory corresponding to a range from the address of the first data to the lower bound is greater than the first threshold, determining, by the first processor, the address of the first data as the updated upper bound, and determining an address obtained by subtracting the first threshold from the address of the first data as the updated lower bound; or
if the address of the first data is less than the lower bound, and a size of data in the memory corresponding to a range from the address of the first data to the upper bound is greater than the first threshold, determining, by the first processor, the address of the first data as the updated lower bound, and determining an address obtained by adding the address of the first data and the first threshold as the updated upper bound.

Specifically, when the address of the first data is not within the range from the upper bound to the lower bound in the first DRR, after the second processor accesses address data of the first data, the first processor needs to update the upper bound and the lower bound in the first DRR. There are the following two updating manners:
(1) If the address of the first data is greater than the upper bound, the address of the first data is determined as the updated upper bound, and the address obtained by subtracting the first threshold from the address of the first data is determined as the updated lower bound.
(2) If the address of the first data is less than the lower bound, the address of the first data is determined as the updated lower bound, and the address obtained by adding the address of the first data and the first threshold is determined as the updated upper bound.

The foregoing updating on the address recorded in the first DRR is similar to a sliding window mechanism, and may be performed in real time according to a status of data read by another processor.

In an optional embodiment, the first processor includes multiple DRRs, each of the multiple DRRs is corresponding to a different address range, and the multiple DRRs include the first DRR; and
the method further includes:
determining, by the first processor, the first DRR from the multiple DRRs according to the address of the first data.

Specifically, multiple DRRs may be designed for one processor, and an address in each of the multiple DRRs is limited to a range. After receiving the first read request message sent by the second processor, the first processor may determine, according to the address of the first data carried in the first read request message, the first DRR including the address of the first data. If none of the DRRs include the address of the first data, the address of the first data may not be accessed by another processor, or may be missed because of the sliding window mechanism, and the first processor needs to further perform determining according to a directory stored in the memory.

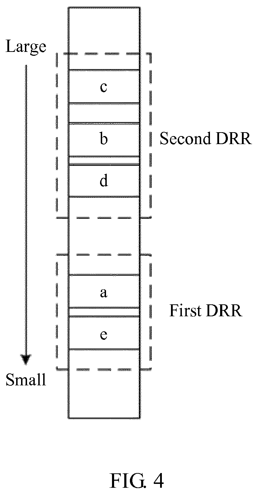

FIG. 4 shows a schematic diagram of addresses in multiple DRRs according to an embodiment of this application. The upper bound of the address in the first DRR shown in FIG. 4 is a, and the lower bound of the address is e. An upper bound in a second DRR is c, and a lower bound in the second DRR is d. The vertical box also represents a complete address set in the first processor. Another processor other than the first processor sequentially accesses addresses a, b, c, d, and e in the first processor. The addresses are c, b, d, a, and e in descending order.

Specifically, after the addresses a, b, c, d, and e in the first processor are sequentially accessed, values in the first DRR and the second DRR are successively as follows:
a: {Ui, L₁} = {a, null}, {U₂, L₂} = {null, null}
b: {Ui, L₁} = {a, null}, {U₂, L₂} = {null, b}
c: {Ui, L₁} = {a, null}, {U₂, L₂} = {c, b}
d: {Ui, L₁} = {a, null}, {U₂, L₂} = {c, d}
e: {Ui, L₁} = {a, e}, {U₂, L₂} = {c, d}

Therefore, an address range finally recorded by the first DRR is {a, e}, and an address range recorded by the second DRR is {c, d}. Snooping and reading of the first data may be initiated at the same time provided that the address of the first data that the second processor requests to read is within the {a, e} range or the {c, d} range.

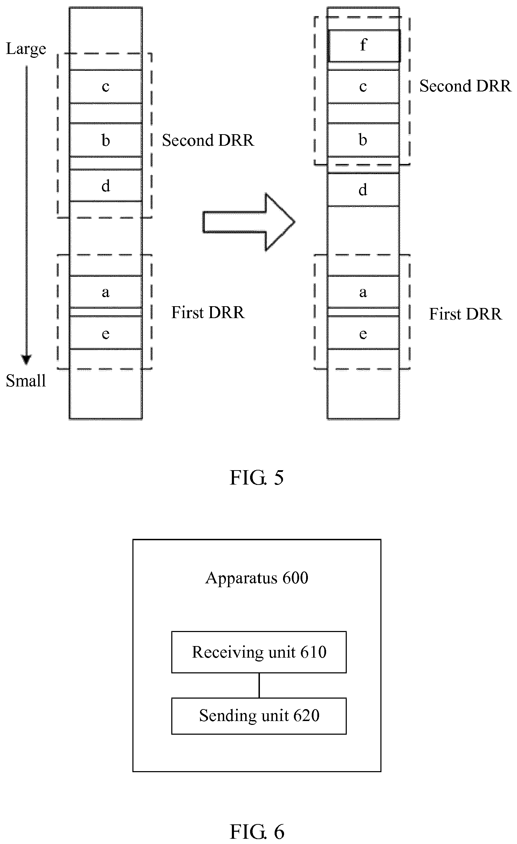

FIG. 5 shows a schematic diagram of updating addresses in multiple DRRs according to an embodiment of this application. As shown in FIG. 5, the original first DRR and the original second DRR are on the left, and an updated first DRR and an updated second DRR are on the right. It is assumed that a range recorded in each DRR is limited to 100 MB, that is, bounds are determined according to a latest address when a range exceeds 100 MB.

On the basis of FIG. 4, another processor accesses data of an address f in the first processor, and the address f is greater than the address c. Therefore, the address f needs to be recorded in the second DRR. A value obtained by subtracting d from f is greater than 100 MB. Therefore, f is set as a new upper bound, and f-100 MB is set as a new lower bound. After the another processor accesses the address f in the first processor, a new first DRR and a new second DRR are separately as follows:
f: {Ui, L₁} = {a, e}, {U₂, L₂} = {f, f-100MB}

After a range is set in a DRR, each DRR is actually equivalent to a sliding window. For an address outside the sliding window, for example, for snooping of the address d, filtering cannot be performed by using the DRR, and a directory in a memory needs to be read. Therefore, a DRR quantity and range are appropriately designed based on an actual system status. Resources of a quantity far less than a size of a directory cache can be used to implement a directory function effectively. Snooping is initiated in advance when needed, and effective filtering is performed when snooping is not needed.

In an optional embodiment, the first processor includes multiple cores, and the multiple cores are in a one-to-one correspondence with the multiple DRRs.

Specifically, a corresponding DRR register may be designed for each core (Core) or each last level cache (Last Level Cache, "LLC" for short) of the first processor. Locality is better within one thread, and therefore, the DRR is more effective. For example, a system address is 40 bits, and each processor has 32 cores. For a 4P system, if a DRR is designed for each core, 3 × 32 × 40 × 2 = 7680 registers are needed. For another example, if a size of the LLC is 32 MB, a range recorded in a DRR may be limited to 64 MB or so, or an appropriate value may be set for the DRR. This is not limited in this embodiment of this application.

In addition, a DRR may be designed for each bank according to a bank of the LLC. This is also not limited in this embodiment of this application.

Specifically, the LLC is generally relatively large, and it is impossible that this large memory is used as a whole. The memory needs to be divided into multiple physical module banks. For example, an LLC of a processor is 40 MB, and the LLC may be divided into 10 banks, and each of the 10 banks is in a size of 4 MB. A DRR is designed for each bank, so that independent processing may be performed in each bank, thereby improving system performance.

In an optional embodiment, the method further includes:
if the address of the first data is not within the range from the upper bound to the lower bound, sending, by the first processor, a third read request message to the memory, where the third read request message is used to request to read the first data and a directory of the first processor, and the directory of the first processor is used to record a status of data, in the memory, accessed by the another processor;
receiving, by the first processor, the first data and the directory of the first processor that are sent by the memory according to the second data read request message;
if the first processor determines, according to the directory of the first processor, that the first data is cached by a fourth processor, sending, by the first processor, a second snoop message to the fourth processor, where the second snoop message is used to indicate the first cache status requested by the second processor;
receiving, by the first processor, a second snoop response message sent by the fourth processor according to the second snoop message, where the second snoop response message is used to indicate that the cache status of the first data has been modified according to the first cache status; and
sending, by the first processor, the first data to the second processor according to the second snoop response message.

Specifically, if the address of the first data is not within the range from the upper bound to the lower bound of the first DRR, it indicates that the address of the first data may not be accessed by another processor, or may be missed because of the sliding window mechanism, and the first processor needs to further perform determining according to a directory stored in the memory. The first processor sends the third read request message to the memory to request to read the first data and the directory of the first processor. After obtaining the first data and the directory of the first processor, the first processor determines, according to the address of the first data and the directory of the first processor, whether the address of the first data is in the directory of the first processor.

If the address of the first data is in the directory of the first processor, it indicates that the first data has been accessed by another processor, and the first processor determines, according to the directory of the first processor, that the first data is cached by the fourth processor. The first processor sends the second snoop message to the fourth processor. After modifying the cache status of the first data according to the first cache status, the fourth processor sends the second snoop response message to the first processor. After receiving the second snoop response message sent by the fourth processor and determining that cache statuses of the first data in multiple processors are the same, the first processor sends the first data to the second processor.

If the address of the first data is not in the directory of the first processor, it indicates that the first data has not been accessed by any processor. The first processor may directly send the read first data to the second processor, and record the cache status of the first data requested by the second processor as the first cache status.

It should be understood that the fourth processor is another processor other than the first processor and the second processor. Therefore, the fourth processor may be one of the at least one third processor. This is not limited in this embodiment of this application.

In an optional embodiment, before the receiving, by a first processor, a first read request message sent by a second processor, the method further includes:
receiving, by the first processor, a third read request message sent by the fourth processor of the at least one third processor, where the third read request message carries the address of the first data and a second cache status of the first data;
sending, by the first processor, a fourth read request message to the memory according to the third read request message, where the fourth read request message is used to request to read the first data;
receiving, by the first processor, the first data sent by the memory according to the fourth read request message; and
sending, by the first processor, the first data to the fourth processor, and recording the cache status of the first data as the second cache status.

Specifically, before the second processor sends the first read request to the first processor, the fourth processor has read the first data. The first processor reads the first data from the memory according to the third read request message sent by the fourth processor, sends the first data to the fourth processor, and records, in a corresponding directory, the cache status of the first data as the second cache status. Herein, the second cache status may be an exclusive state, or may be a shared state. This is not limited in this embodiment of this application.

It should be understood that serial numbers of the foregoing processes does not mean an execution order. The execution order of the processes should be determined according to functions and internal logic of the processes, and should not constitute any limitation on an implementation process of this embodiment of this application.

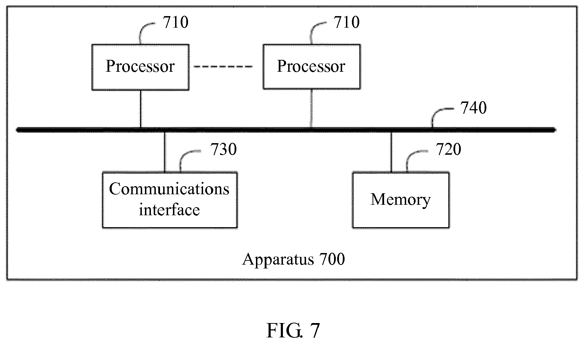

The foregoing describes in detail the data read method according to this embodiment of this application with reference to FIG. 1 to FIG. 5. The following describes in detail a data read apparatus according to an embodiment of this application with reference to FIG. 6 and FIG. 7.

FIG. 6 shows a data read apparatus 600 according to an embodiment of this application. The apparatus 600 includes:
a receiving unit 610, configured to receive a first read request message sent by a second processor, where the first read request message carries an address of first data that the second processor needs to read and a first cache status of the first data, the apparatus includes a first directory range register DRR, and the first DRR is configured to record an upper bound and a lower bound of an address of data that is in a memory corresponding to the first processor and that is accessed by another processor; and
a sending unit 620, configured to: if the address of the first data is within a range from the upper bound to the lower bound, send a first snoop message to at least one third processor other than the second processor, and simultaneously send a second read request message to the memory, where the second read request message is used to request to read the first data, and the first snoop message is used to indicate the first cache status requested by the second processor;
the receiving unit 610 is further configured to receive a first snoop response message sent by each of the at least one third processor according to the first snoop message, where the first snoop response message is used to indicate that a cache status of the first data has been modified according to the first cache status; and receive the first data sent by the memory according to the second data read request message; and
the sending unit 620 is further configured to send the first data to the second processor according to the first snoop response message.

According to the data read apparatus in this embodiment of this application, the DRR is configured in the first processor to record the upper bound and the lower bound of the address of the data that is in the memory corresponding to the first processor and that is accessed by the another processor. When receiving the request sent by the second processor, the first processor can perform filtering effectively if snooping is not needed, or can initiate snooping at the same time when reading memory data in advance if snooping is needed. This can save a storage resource, and reduce design costs, thereby improving user experience.

Optionally, a size of data in the memory corresponding to the range from the upper bound to the lower bound is less than or equal to a first threshold, and the apparatus 600 further includes an updating unit, configured to update the upper bound and the lower bound according to the address of the first data and the first threshold.

Optionally, the updating unit is specifically configured to: if the address of the first data is greater than the upper bound, and a size of data in the memory corresponding to a range from the address of the first data to the lower bound is greater than the first threshold, determine the address of the first data as the updated upper bound, and determine an address obtained by subtracting the first threshold from the address of the first data as the updated lower bound; or if the address of the first data is less than the lower bound, and a size of data in the memory corresponding to a range from the address of the first data to the upper bound is greater than the first threshold, determine the address of the first data as the updated lower bound, and determine an address obtained by adding the address of the first data and the first threshold as the updated upper bound.

Optionally, the first processor includes multiple DRRs, each of the multiple DRRs is corresponding to a different address range, and the multiple DRRs include the first DRR; and the apparatus 600 includes a determining unit, configured to determine the first DRR from the multiple DRRs according to the address of the first data.

Optionally, the first processor includes multiple cores, and the multiple cores are in a one-to-one correspondence with the multiple DRRs.

Optionally, the sending unit 620 is further configured to: if the address of the first data is not within the range from the upper bound to the lower bound, send a third read request message to the memory, where the third read request message is used to request to read the first data and a directory of the first processor, and the directory of the first processor is used to record a status of data, in the memory, accessed by the another processor. The receiving unit 610 is further configured to receive the first data and the directory of the first processor that are sent by the memory according to the second data read request message. The sending unit 620 is further configured to: if it is determined, according to the directory of the first processor, that the first data is cached by a fourth processor, send a second snoop message to the fourth processor, where the second snoop message is used to indicate the first cache status requested by the second processor. The receiving unit 610 is further configured to receive a second snoop response message sent by the fourth processor according to the second snoop message, where the second snoop response message is used to indicate that the cache status of the first data has been modified according to the first cache status. The sending unit 620 is further configured to send the first data to the second processor according to the second snoop response message.

Optionally, the receiving unit 610 is further configured to: before the receiving a first read request message sent by a second processor, receive a third read request message sent by the fourth processor of the at least one third processor, where the third read request message carries the address of the first data and a second cache status of the first data. The sending unit 620 is further configured to send a fourth read request message to the memory according to the third read request message, where the fourth read request message is used to request to read the first data. The receiving unit 610 is further configured to receive the first data sent by the memory according to the fourth read request message. The sending unit 620 is further configured to send the first data to the fourth processor. The apparatus 600 further includes a recording unit, configured to record the cache status of the first data as the second cache status.

It should be understood that the apparatus 600 herein is implemented in form of a functional unit. The term "unit" herein may refer to an application specific integrated circuit (Application Specific Integrated Circuit, ASIC), an electronic circuit, a processor configured to execute one or more software or firmware programs (such as a shared processor, a dedicated processor, or a group processor), a memory, a combinational logic circuit, and/or another appropriate component supporting the described function. In an optional example, a person skilled in the art can understand that the apparatus 600 may be specifically the first processor in the foregoing embodiment, and the apparatus 600 may be configured to execute the procedures and/or steps corresponding to the first processor in the foregoing method embodiment. To avoid repetition, details are not repeated herein.

FIG. 7 shows another data read apparatus 700 according to an embodiment of this application. The apparatus 700 includes at least one processor 710, a memory 720, and a communications interface 730. The at least one processor 710, the memory 720, and the communications interface 730 are connected by using an internal connection path.

The memory 720 is configured to store a computer-executable instruction.

The at least one processor 710 is configured to execute the computer-executable instruction stored in the memory 720, so that the apparatus 700 can execute the data read method provided in the foregoing method embodiment by performing data exchange with another apparatus by using the communications interface 730.

The at least one processor 710 is configured to perform the following operations:
receiving, by using the communications interface 730, a first read request message sent by a second processor, where the first read request message carries an address of first data that the second processor needs to read and a first cache status of the first data, the apparatus includes a first directory range register DRR, and the first DRR is configured to record an upper bound and a lower bound of an address of data that is in a memory corresponding to the first processor and that is accessed by another processor;
if the address of the first data is within a range from the upper bound to the lower bound, sending, by using the communications interface 730, a first snoop message to at least one third processor other than the second processor, and simultaneously sending a second read request message to the memory, where the second read request message is used to request to read the first data, and the first snoop message is used to indicate the first cache status requested by the second processor;
receiving, by using the communications interface 730, a first snoop response message sent by each of the at least one third processor according to the first snoop message, where the first snoop response message is used to indicate that a cache status of the first data has been modified according to the first cache status;
receiving, by using the communications interface 730, the first data sent by the memory according to the second data read request message; and
sending, according to the first snoop response message, the first data to the second processor by using the communications interface 730.

According to the data read apparatus in this embodiment of this application, the DRR is configured in the first processor to record the upper bound and the lower bound of the address of the data that is in the memory corresponding to the first processor and that is accessed by the another processor. When receiving the request sent by the second processor, the first processor can perform filtering effectively if snooping is not needed, or can initiate snooping at the same time when reading memory data in advance if snooping is needed. This can save a storage resource, and reduce design costs, thereby improving user experience.

Optionally, a size of data in the memory corresponding to the range from the upper bound to the lower bound is less than or equal to a first threshold, and the at least one processor 710 is further configured to update the upper bound and the lower bound according to the address of the first data and the first threshold.

Optionally, the at least one processor 710 is specifically configured to: if the address of the first data is greater than the upper bound, and a size of data in the memory corresponding to a range from the address of the first data to the lower bound is greater than the first threshold, determine the address of the first data as the updated upper bound, and determine an address obtained by subtracting the first threshold from the address of the first data as the updated lower bound; or if the address of the first data is less than the lower bound, and a size of data in the memory corresponding to a range from the address of the first data to the upper bound is greater than the first threshold, determine the address of the first data as the updated lower bound, and determine an address obtained by adding the address of the first data and the first threshold as the updated upper bound.

Optionally, the first processor includes multiple DRRs, each of the multiple DRRs is corresponding to a different address range, and the multiple DRRs include the first DRR; and the at least one processor 710 is further configured to determine the first DRR from the multiple DRRs according to the address of the first data.

Optionally, the first processor includes multiple cores, and the multiple cores are in a one-to-one correspondence with the multiple DRRs.

Optionally, the at least one processor 710 is further configured to: if the address of the first data is not within the range from the upper bound to the lower bound, send a third read request message to the memory by using the communications interface 730, where the third read request message is used to request to read the first data and a directory of the first processor, and the directory of the first processor is used to record a status of data, in the memory, accessed by the another processor; receive, by using the communications interface 730, the first data and the directory of the first processor that are sent by the memory according to the second data read request message; if it is determined, by using the communications interface 730 according to the directory of the first processor, that the first data is cached by a fourth processor, send a second snoop message to the fourth processor, where the second snoop message is used to indicate the first cache status requested by the second processor; receive, by using the communications interface 730, a second snoop response message sent by the fourth processor according to the second snoop message, where the second snoop response message is used to indicate that the cache status of the first data has been modified according to the first cache status; and send the first data to the second processor according to the second snoop response message by using the communications interface 730.

Optionally, the at least one processor 710 is further configured to: before the receiving a first read request message sent by a second processor, receive, by using the communications interface 730, a third read request message sent by the fourth processor of the at least one third processor, where the third read request message carries the address of the first data and a second cache status of the first data; send a fourth read request message to the memory according to the third read request message by using the communications interface 730, where the fourth read request message is used to request to read the first data; receive, by using the communications interface 730, the first data sent by the memory according to the fourth read request message; and send the first data to the fourth processor by using the communications interface 730. The at least one processor 710 is further configured to record the cache status of the first data as the second cache status.

It should be understood that the apparatus 700 may be specifically the first processor in the foregoing embodiment 200, and may be configured to execute the steps and/or procedures corresponding to the first processor in the foregoing method embodiment 200.

It should be understood that in this embodiment of this application, the at least one processor may include different types of processor, or include a same type of processor. The processor may be any one of the following devices having a computing and processing capability: a central processing unit (Central Processing Unit, "CPU" for short), an ARM processor, a field programmable gate array (Field Programmable Gate Array, "FPGA" for short), or a dedicated processor. In an optional implementation, the at least one processor may be integrated as a many-core processor.

The memory may be any one or any combination of the following: a random access memory (Random Access Memory, "RAM" for short), a read-only memory (read only memory, "ROM" for short), a non-volatile memory (non-volatile memory, "NVM" for short), a solid state drive (Solid State Drives, "SSD" for short), a mechanical hard disk, a disk, a disk array, or another storage medium.

The communications interface is configured for data exchange between the apparatus and another device. The communications interface may be any one or any combination of the following devices: a network interface (such as an Ethernet interface), a wireless network interface card, or a device having a network access function.

Optionally, the apparatus 700 may further include a bus 740. The bus may include an address bus, a data bus, a control bus, or the like. For ease of representation, the bus is represented by a thick line in FIG. 7. The bus may be any one or any combination of the following: an Industry Standard Architecture (Industry Standard Architecture, "ISA" for short) bus, a Peripheral Component Interconnect (Peripheral Component Interconnect, "PCI" for short) bus, an Extended Industry Standard Architecture (Extended Industry Standard Architecture, "EISA" for short) bus, or another wired data transmission device.

In an implementation process, steps in the foregoing methods can be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data read method, comprising:
receiving, by a first processor, a first read request message sent by a second processor, wherein the first read request message carries an address of first data that the second processor needs to read and a first cache status of the first data, the first processor comprises a first directory range register, DRR, and the first DRR is configured to record an upper bound and a lower bound of an address of data that is in a memory corresponding to the first processor and that is accessed by another processor;
if the address of the first data is within a range from the upper bound to the lower bound, sending, by the first processor, a first snoop message to at least one third processor other than the second processor, and simultaneously sending a second read request message to the memory, wherein the second read request message is used to request to read the first data, and the first snoop message is used to indicate the first cache status requested by the second processor;
receiving, by the first processor, a first snoop response message sent by each of the at least one third processor according to the first snoop message, wherein the first snoop response message is used to indicate that a cache status of the first data has been modified according to the first cache status;
receiving, by the first processor, the first data sent by the memory according to the second data read request message; and
sending, by the first processor, the first data to the second processor according to the first snoop response message.

2. The method according to claim 1, wherein a size of data in the memory corresponding to the range from the upper bound to the lower bound is less than or equal to a first threshold, and the method further comprises:
updating, by the first processor, the upper bound and the lower bound according to the address of the first data and the first threshold.

3. The method according to claim 2, wherein the updating the upper bound and the lower bound comprises:
if the address of the first data is greater than the upper bound, and a size of data in the memory corresponding to a range from the address of the first data to the lower bound is greater than the first threshold, determining, by the first processor, the address of the first data as the updated upper bound, and determining an address obtained by subtracting the first threshold from the address of the first data as the updated lower bound; or
if the address of the first data is less than the lower bound, and a size of data in the memory corresponding to a range from the address of the first data to the upper bound is greater than the first threshold, determining, by the first processor, the address of the first data as the updated lower bound, and determining an address obtained by adding the address of the first data and the first threshold as the updated upper bound.

4. The method according to any one of claims 1 to 3, wherein the first processor comprises multiple DRRs, each of the multiple DRRs is corresponding to a different address range, and the multiple DRRs comprise the first DRR; and
the method further comprises:
determining, by the first processor, the first DRR from the multiple DRRs according to the address of the first data.

5. The method according to any one of claims 1 to 4, wherein the first processor comprises multiple cores, and the multiple cores are in a one-to-one correspondence with the multiple DRRs.

6. The method according to any one of claims 1 to 5, wherein the method further comprises:
if the address of the first data is not within the range from the upper bound to the lower bound, sending, by the first processor, a third read request message to the memory, wherein the third read request message is used to request to read the first data and a directory of the first processor, and the directory of the first processor is used to record a status of data, in the memory, accessed by the another processor;
receiving, by the first processor, the first data and the directory of the first processor that are sent by the memory according to the second data read request message;
if the first processor determines, according to the directory of the first processor, that the first data is cached by a fourth processor, sending, by the first processor, a second snoop message to the fourth processor, wherein the second snoop message is used to indicate the first cache status requested by the second processor;
receiving, by the first processor, a second snoop response message sent by the fourth processor according to the second snoop message, wherein the second snoop response message is used to indicate that the cache status of the first data has been modified according to the first cache status; and
sending, by the first processor, the first data to the second processor according to the second snoop response message.

7. The method according to any one of claims 1 to 6, wherein before the receiving, by a first processor, a first read request message sent by a second processor, the method further comprises:
receiving, by the first processor, a third read request message sent by the fourth processor of the at least one third processor, wherein the third read request message carries the address of the first data and a second cache status of the first data;
sending, by the first processor, a fourth read request message to the memory according to the third read request message, wherein the fourth read request message is used to request to read the first data;
receiving, by the first processor, the first data sent by the memory according to the fourth read request message; and
sending, by the first processor, the first data to the fourth processor, and recording the cache status of the first data as the second cache status.

8. A data read apparatus, comprising:
a receiving unit, configured to receive a first read request message sent by a second processor, wherein the first read request message carries an address of first data that the second processor needs to read and a first cache status of the first data, the apparatus comprises a first directory range register DRR, and the first DRR is configured to record an upper bound and a lower bound of an address of data that is in a memory corresponding to the first processor and that is accessed by another processor; and
a sending unit, configured to: if the address of the first data is within a range from the upper bound to the lower bound, send a first snoop message to at least one third processor other than the second processor, and simultaneously send a second read request message to the memory, wherein the second read request message is used to request to read the first data, and the first snoop message is used to indicate the first cache status requested by the second processor;
the receiving unit is further configured to:
receive a first snoop response message sent by each of the at least one third processor according to the first snoop message, wherein the first snoop response message is used to indicate that a cache status of the first data has been modified according to the first cache status; and
receive the first data sent by the memory according to the second data read request message; and
the sending unit is further configured to:
send the first data to the second processor according to the first snoop response message.

9. The apparatus according to claim 8, wherein a size of data in the memory corresponding to the range from the upper bound to the lower bound is less than or equal to a first threshold, and the apparatus further comprises:
an updating unit, configured to update the upper bound and the lower bound according to the address of the first data and the first threshold.

10. The apparatus according to claim 9, wherein the updating unit is specifically configured to:
if the address of the first data is greater than the upper bound, and a size of data in the memory corresponding to a range from the address of the first data to the lower bound is greater than the first threshold, determine the address of the first data as the updated upper bound, and determine an address obtained by subtracting the first threshold from the address of the first data as the updated lower bound; or
if the address of the first data is less than the lower bound, and a size of data in the memory corresponding to a range from the address of the first data to the upper bound is greater than the first threshold, determine the address of the first data as the updated lower bound, and determine an address obtained by adding the address of the first data and the first threshold as the updated upper bound.

11. The apparatus according to any one of claims 8 to 10, wherein the first processor comprises multiple DRRs, each of the multiple DRRs is corresponding to a different address range, and the multiple DRRs comprise the first DRR; and
the apparatus further comprises:
a determining unit, configured to determine the first DRR from the multiple DRRs according to the address of the first data.

12. The apparatus according to any one of claims 8 to 11, wherein the first processor comprises multiple cores, and the multiple cores are in a one-to-one correspondence with the multiple DRRs.

13. The apparatus according to any one of claims 8 to 12, wherein the sending unit is further configured to:
if the address of the first data is not within the range from the upper bound to the lower bound, send a third read request message to the memory, wherein the third read request message is used to request to read the first data and a directory of the first processor, and the directory of the first processor is used to record a status of data, in the memory, accessed by the another processor;
the receiving unit is further configured to:
receive the first data and the directory of the first processor that are sent by the memory according to the second data read request message;
the sending unit is further configured to:
if it is determined, according to the directory of the first processor, that the first data is cached by a fourth processor, send a second snoop message to the fourth processor, wherein the second snoop message is used to indicate the first cache status requested by the second processor;
the receiving unit is further configured to:
receive a second snoop response message sent by the fourth processor according to the second snoop message, wherein the second snoop response message is used to indicate that the cache status of the first data has been modified according to the first cache status; and
the sending unit is further configured to:
send the first data to the second processor according to the second snoop response message.

14. The apparatus according to any one of claims 8 to 13, wherein the receiving unit is further configured to:
before the receiving a first read request message sent by a second processor, receive a third read request message sent by the fourth processor of the at least one third processor, wherein the third read request message carries the address of the first data and a second cache status of the first data;
the sending unit is further configured to:
send a fourth read request message to the memory according to the third read request message, wherein the fourth read request message is used to request to read the first data;
the receiving unit is further configured to:
receive the first data sent by the memory according to the fourth read request message;
the sending unit is further configured to:
send the first data to the fourth processor; and
the apparatus further comprises:
a recording unit, configured to record the cache status of the first data as the second cache status.
